# EUROPEAN PATENT APPLICATION

(11) **EP 4 059 898 A1**
(43) Date of publication of application: **21.09.2022**
(21) Application number: 21162745.0
(22) Date of filing: 16.03.2021
(51) Int. Cl.: C02F 1/00, C02F 1/42

(54) **METHOD FOR DETERMINING A DEPLETION OF A FILTER CARTRIDGE WITHIN A LIQUID FILTER SYSTEM**

(71) Applicant: Brita GmbH, 65232 Taunusstein (DE)
(72) Inventor: HAGEN, Thomas, 55122 Mainz (DE)

(57) **Abstract**

A method for determining a depletion of a filter cartridge (11) within a liquid filter system (8) comprises a configuration step performed by the liquid filter system (8) and an external electronic data processing device (9). An individual depletion threshold liquid quantity is determined with the external electronic data processing device (9), and the individual depletion threshold liquid quantity is transmitted to and stored within the comparison unit (13) of the liquid filter system (8) as updated data for the depletion threshold liquid quantity that is used for estimating the depletion of the filter cartridge (11).

## Description

### Technical Field

The invention relates to a method for determining a depletion of a filter cartridge within a liquid filter system comprising a determination unit, a comparison unit and an indicator unit, whereby in a determination step a filtered liquid quantity that has been filtered by the filter cartridge is determined by the determination unit, whereby in a comparison step the determined filtered liquid quantity is compared by the comparison unit with a depletion threshold liquid quantity that is stored within the comparison unit and that corresponds to the depletion of the filter cartridge due to the amount of liquid that has been filtered with the liquid filter system, and whereby in case of the filtered liquid quantity exceeds the depletion threshold liquid quantity, an depletion information corresponding to the filtered liquid quantity exceeding the depletion threshold liquid quantity is indicated to a user of the liquid filter system by the indicator unit.

### Background of the invention

Liquid filter systems for drinkable liquids have reached a widespread usage and allow for good quality drinkable liquids reducing the importance of the quality of the source liquid that is used as basis for the drinkable liquid. In particular, household water filter systems have been developed and are widely used for improving the quality of the tap water that is distributed to the respective household. Usually, the liquid filter systems and in particular the water filter systems comprise a first container that can be filled with a liquid or with water to be filtered, and a second container that is fluidly connected via a filter cartridge with the first container, whereby the liquid that flows from the first container into the second container must pass through the filter cartridge and will be filtered during the passage through the filter cartridge.

Many household filter systems rely on gravitational forces and comprise an arrangement of the first tank positioned above the second tank, resulting in a liquid flow from the first tank into the second tank without the need for applying additional pressure to create the liquid flow. However, there are also filter systems known that comprise a pump system or another pressure system that exerts a pressure to force the liquid or the water to flow through the filter cartridge.

The filter cartridge usually comprises active carbons to reduce the concentration of contaminants like chlorine, suspended solids, heavy metals such as lead, and optionally comprises ion-exchange resins to reduce the concentration of calcium and magnesium ions which will result in reducing the water hardness. The filtered liquid and in particular the filtered water usually have a better taste and also has an improved quality for human consumption.

The contents of the filter cartridge are depleted during the use of the filter cartridge for filtering an increasing amount of a liquid. After having filtered a quantity of liquid, the filter cartridge is exhausted and needs to be removed and replaced by a new filter cartridge. Thus, the filter cartridge is usually removably mounted within the filter system. Many filter systems comprise an indicator unit that is capable of signaling the need for replacing same.

It is not solely the amount of water, but also the content of the water to be filtered that increasingly exhausts the filter's active filtering agents. Thus, the depletion of the filter cartridge also depends on the water properties. However, many indicator units determine the need for replacing a filter cartridge on the basis of the duration of time that the filter cartridge is used or on the basis of the amount of water that has been passed the filter cartridge. Obviously, such indicator units cannot take into account the specific water properties that are responsible for the depletion of the filter cartridge. Therefore, such indicator units can only indicate a rough estimation of the exhaustion of the filter cartridge. By way of precaution, the commonly used indicator units do indicate the need to replace the filter cartridge well before an actual exhaustion of the filter cartridge occurs. As a result, valuable filter medium is wasted due to a premature replacement of a filter cartridge that is still able to properly filter some more water.

Other indicator units that are known from practice comprise a link to an external electronic data processing device and continuously transmit data like the amount of water that has been filtered to an external data processing device. The external data processing device is used for continuously calculating the ongoing depletion of the filter cartridge, which will be indicated with the external data processing device. It is also possible to transmit some information back to the indicator unit within the liquid filter system which can be indicated by the indicator unit. However, such indicator units are costly and require continuous data communication with the external data processing device.

Accordingly, there is a need for providing for a method for determining the depletion of a filter cartridge within a liquid filter system without requiring costly data processing units within an indicator unit, and without requiring a continuous data transfer to and from an external data processing device.

### Summary of the invention

The present invention relates to a method for determining the depletion of a filter cartridge as described at the beginning, characterized in that within a configuration step an individual depletion threshold liquid quantity is determined with an external electronic data processing device with individual information, and the individual depletion threshold liquid quantity is transmitted to the transmission unit and stored within the comparison unit as updated data for the depletion threshold liquid quantity that is used within the comparison step. Thus, there is only one data transfer needed from an external electronic data processing device for providing the information to the liquid filter system that is required for determining or updating an individual depletion of the filter cartridge on the basis of individualized information. The individual information can be provided once at the beginning of the service life of the filter cartridge or at the beginning of the service life of the liquid filter system, if e.g. only one kind of filter cartridge can be used within the liquid filter system. Such a configuration step can be performed at any place or location, e.g. at a point of sale of the filter cartridges or of the liquid filter system, or at the premises of the user. The individual depletion threshold liquid quantity can also be repeatedly determined and transmitted to the transmission unit of the liquid filter device, e.g. in case that a new filter cartridge is inserted into the liquid filter system that might have different depletion characteristics, or in case that a significant change of characteristics of a liquid that will be filtered with the liquid filter device.

The external electronic data processing device can be a smartphone with an appropriate program for performing the required process steps of obtaining or selecting individual information and of modifying the preset depletion threshold liquid quantity or of determining the individual depletion threshold liquid quantity that is stored and used as updated data for the depletion threshold liquid quantity. The external electronic data processing device can also be a computer or any other kind of data processing device with an input device. Thus, it is possible to forward a request for performing the configuration step to a server of the manufacturer or distributor of the filter cartridge that determines the individual information for updating the preset depletion threshold liquid quantity on the basis of additional information that is forwarded from the external electronic data processing device to the server. The additional information that is forwarded to the server can be identical to the individual information. It is also possible to forward any other information that allows to individualize the subsequent use of the liquid filter system and that can be combined with further additional information provided from the server or from any other data storage or data providing system. Preferably, the external electronic data processing device is suitable for accessing the internet, which will allow for accessing individual information that is available on databases that can be accessed via the internet. It is also possible to store some individual information within the external electronic data processing device, and to update the individual information that is stored within the external electronic data processing device with information provided via the internet.

Data transfer between the liquid filter system and the external electronic data processing device can be performed by wire, i.e. with a cable connection that must be established during the configuration step, or wireless, e.g. by making use of standardized wireless data communication protocols like Bluetooth, Near-Field Communication or internet protocols. Making use of wireless data transfer during the configuration step allows for safe encapsulation of the electronic components within the liquid filter system and enables an easy and comfortable use by the user.

Even though some aspects of the invention are described for water and in particular drinking water, it is understood that the invention can be applied to all liquids that can be filtered with the liquid filter system.

The individual information can comprise some information about the geographical location related to the use of the liquid filter system, e.g. the location of the user that makes use of the liquid filter system. The location information can be as precise as identifying a city or a part of the city where the liquid filter system is used. The location information can also identify a region or a belonging to a water supply area from which provides for the water to be filtered. It is also possible to make use of any other individual information that individualizes the water that will be filtered with the liquid filter device.

It is also possible to perform the configuration step more than once, e.g. if, for example, the filter system is to be taken to another location and to be used there over a period of several days or weeks, which will result in a change of characteristics of the liquid, i.e. the water that will be filtered with the liquid filter system.

It is considered a main aspect and advantage of the present invention that providing for and including the individual information for estimating the depletion of the filter cartridge does not require a different or more costly comparison unit within the liquid filter system, as only a value for a generic depletion threshold liquid quantity is replaced by a value for an individual depletion threshold liquid quantity. Even in case that such an updated value is not requested or provided by the external electronic data processing device, the comparison unit of the liquid filter system will be able to perform and to determine a level of depletion of the filter cartridge, even though it is not an individual level of depletion that takes into account specific information for the liquid that is usually filtered with the liquid filter system during the service life of the filter cartridge.

According to an advantageous embodiment of the invention, the individual information for calculating the individual depletion threshold liquid quantity comprises information about local water hardness of water that is filtered with the liquid filter system. Such information is usually available to a user and can be entered manually into the external electronic data processing device, e.g. a smartphone or a computer. Water hardness is one of the main factors that affect the depletion of the filter cartridge. Thus, by modifying the depletion threshold liquid quantity by taking into account only the water hardness will usually result in a reasonably accurate determination of the individual depletion threshold liquid quantity that can be filtered before the filtering effect deteriorates due to the depletion of the filter cartridge.

In yet another embodiment of the invention the individual information for calculating the individual depletion threshold liquid quantity comprises information about the filter cartridge that is currently in use within the liquid filter system or information about individual usage of the liquid filter system by a user. For example, the liquid filter system allows for inserting and using different filter cartridges with different depletion threshold liquid quantities. The user can enter information about the type of filter cartridges that will be used with the liquid filter system into the external electronic data processing device, and during the configuration step the individual depletion threshold liquid quantity for this type of filter cartridges is determined and afterwards transferred to the liquid filter system. It is also possible to enter information about individual preferences of use of the liquid filter system. If e.g. the liquid quantity already filtered by the filter cartridge is determined on the basis of the number of liquid dispensing procedures, an individual preference information for a user might differ between repeatedly dispensing only small amounts of water and usually dispensing the whole amount of the filtered liquid.

According to an advantageous embodiment of the invention, during the configuration step the external electronic data processing device requests a manual input for the individual information. Requesting a manual input for the individual information and calculating the individual depletion threshold liquid quantity does not require complex hardware or large resources, and can be performed on any smartphone or tablet computer or laptop or deskbound computer that is able to communicate with the liquid filter device for transmitting the respective data from and to the liquid filter device. Most users will have access to such a device, which then can be used for performing the configuration step. Furthermore, programming the software that is required on the electronic data processing device is very simple, as no complex calculations are required for determining the individual depletion threshold liquid quantity that is returned to the liquid filter system. The software that is required on the external electronic data processing device can be easily distributed by the producer of the filter cartridges or of the liquid filter systems.

In yet another aspect of the invention, that during the configuration step the external electronic data processing device evaluates graphical information from a digital picture and determines the individual depletion threshold liquid quantity on the basis of the evaluated graphical information. In order to further simplify the handling for the user, an option can be offered to take a picture of a bar code or a matrix code that contains information about e.g. local water hardness or other individual information, and to determine the individual depletion threshold liquid quantity on the basis of information that is extracted from the bar code or the matrix code. It is also possible to extract individual information of e.g. local water hardness from pictures showing results of tests that have been performed with commercially available testing kits.

According to yet another embodiment of the invention, during the configuration step the electronic data processing device comprises a geographic data obtaining unit and automatically obtains the individual information on the basis of the geographic data obtained with the geographic data obtaining unit. Many smartphones or tablet computers comprise a geographic data obtaining unit, e.g. a GPS-sensor that provides very accurate geographic location information and can be easily accessed by a software that is programmed and used for determining the individual depletion threshold liquid quantity. The current location information can be compared with a database in which, for example, the water hardness depending on the respective location is stored. On the basis of the water hardness that applies for the current location the individual depletion threshold quantity can be calculated and returned to the liquid filter system.

Furthermore, it is also possible that the indicator unit indicates a remaining information that corresponds to a remaining quantity of liquid that can be filtered with the liquid filter system before the filtered liquid quantity exceeds the depletion threshold liquid quantity. The remaining information can be a simple light emitting diode that emits light if the remaining quantity of liquid is zero or below a preset minimum threshold value. The remaining information can also be a flashing light with the intervals between single flashed becoming shorter as the remaining quantity approaches zero or the preset minimum threshold value. It is also possible to indicate the remaining information by other means, e.g. by different light colors or by a bar graph display. The remaining information can be determined on the basis of the quantity of water that has already been filtered with the current filter cartridge. The quantity of water that has been filtered can be approximated by e.g. automatically counting the number of refills or by automatically measuring the duration of water flowing towards or from the filter cartridge. It is also possible to determine the remaining information with a water level meter.

The configuration and adaption of a depletion threshold liquid quantity of a liquid filter system to individual usage of a user requires only once the determination of the individual depletion threshold liquid quantity by an external device like e.g. a smartphone, and subsequent transfer of the individual depletion threshold liquid quantity to the liquid filter system for updating this value. No costly modification or upgrade of the liquid filter system is required in order to allow for an individual adaption of the depletion threshold liquid quantity, which will result in better use of the filter cartridges. Of course, the method also allows for repeated updates of the individual depletion threshold liquid quantity as need arises. Each individual adaption only requires the use of e.g. a smartphone and the transmission of the data from the smartphone to the liquid filter system.

However, according to yet another aspect of the invention, at the beginning of the configuration step a preset depletion threshold liquid quantity data is transmitted by the transmission unit to the external electronic data processing device, and that an individual depletion threshold liquid quantity is calculated with the external electronic data processing device by modifying the preset depletion threshold liquid quantity with individual information provided from the external electronic data processing device. Thus, it is not necessary to enter or obtain specific information about the type of filter cartridge that is used with the liquid filter system. The generic depletion threshold liquid quantity is provided by the liquid filter system and only modified by the external electronic data processing device, e.g. lowered or increased by a factor determined on the basis of the local water hardness or the difference of the local value to a preset generic value of water hardness.

### Brief description of the drawings

The present invention will be more fully understood, and further features will become apparent, when reference is made to the following detailed description and the accompanying drawings. The drawings are merely representative and are not intended to limit the scope of the claims. In fact, those of ordinary skill in the art may appreciate upon reading the following specification and viewing the present drawings that various modifications and variations can be made thereto without deviating from the innovative concepts of the invention. Like parts depicted in the drawings are referred to by the same reference numerals.
Figure 1 illustrates a schematic representation of the method for determining a depletion of a filter cartridge within a liquid filter system according to the invention, and
Figure 2 illustrates a schematic representation of a liquid filter system that communicates with an external electronic data processing device for performing the method illustrated in Figure 1.

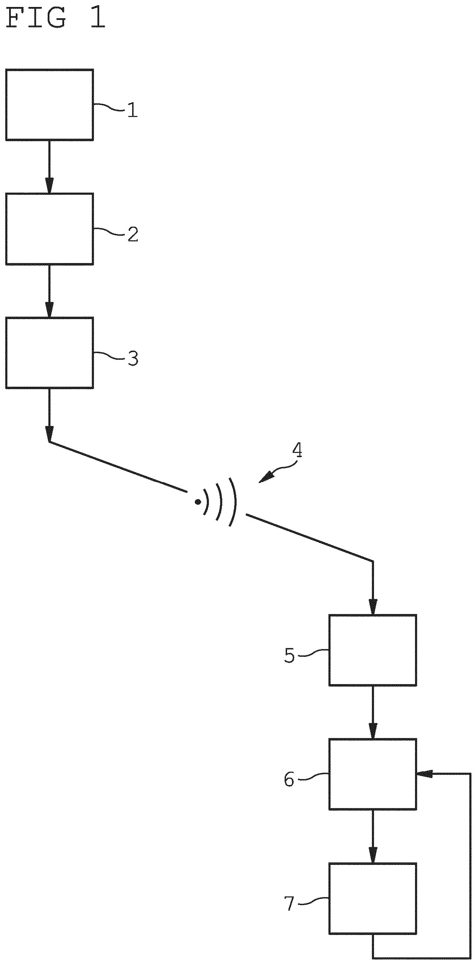

Figure 1 illustrates a schematic flow chart of a method for determining a depletion of a filter cartridge within a liquid filter system according to the invention. Within a starting step 1, a user activates a program on an external electronic data processing device, e.g. a smartphone. The program allows for determining an individual depletion threshold liquid quantity on the basis of individual information that is entered into or obtained from the external electronic data processing device. During an information retrieving step 2, the external electronic data processing device retrieves an individual information about the liquid that will be presumably filtered with the liquid filter system during the lifecycle of the filter cartridge that has been inserted into the liquid filter system. The individual information can be a value representing the water hardness of water that will be filtered with the filter cartridge. This value can be manually entered by a user. It is also possible to determine a water hardness value on the basis of geographic location information that is provided e.g. by a GPS-sensor of the external electronic data processing device. The geographic location information can be used to retrieve a water hardness value e.g. from a database that comprises a list of geographic locations and corresponding water hardness values. Instead of solely a water hardness value, it is also possible to take into account other individual information that might affect the depletion of the filter cartridge during the intended use of the filter cartridge within the liquid filter system, e.g. the content or identification of particles or components that will be removed from the liquid during the filtering process. Furthermore, the individual information also comprises the identification of a type of filter cartridge or at least the identification of a generic and preset depletion threshold liquid quantity that will allow the correct determination of the individual depletion threshold liquid quantity that is applicable for the liquid filter system and the filter cartridges that will be used by the user. Such an information about the type of filter cartridge that is currently used can also be provided from the liquid filter system and e.g. wireless transmitted to the external electronic data processing device upon request from that device or upon activation by a user, e.g. by pressing a button at the liquid filter system.

Within a subsequent calculation step 3, the individual depletion threshold liquid quantity data will be calculated by the external electronic data processing device on the basis of the individual information. The starting step 1, the information retrieving step 2 and the calculation step 3 are part of a configuration step for configuring and adapting the depletion threshold liquid quantity data within the liquid filter system. Then, the individual depletion threshold liquid quantity data is transmitted to the liquid filter system during a transmission step 4.

Within a depletion value setting step 5, the individual depletion threshold liquid quantity value is stored within the liquid filter system, e.g. within the control unit or within a storage unit that can be accessed by the control unit.

During subsequent use of the liquid filter system, a filtered liquid determination unit continuously performs a determination step 6 for determining a quantity of liquid value that represents the quantity of liquid that has been filtered with the filter cartridge. Furthermore, either also continuously or after each update of the filtered quantity of liquid a comparison step 7 is performed. Within the comparison step 7, the current quantity of liquid value that has been determined within the determination step 6 is compared to the individual depletion threshold liquid quantity value that has been provided by the external electronic data processing device. In case that the current quantity of liquid value exceeds or is near to the individual depletion threshold liquid quantity value, a depletion information corresponding to the filtered liquid quantity approaching or exceeding the individual depletion threshold liquid quantity is indicated to a user of the liquid filter system by an indicator unit of the liquid filter system. Thus, the user is informed about upcoming or already reached depletion of the filter cartridge, which allows the user to arrange for a replacement of the filter cartridge.

If a change of the type of filter cartridge is detected by the liquid filter system or by the user, either by manual input of a user or automatically, a new configuration step comprising the steps 1 to 5 is triggered and performed before the liquid filter system settles again into the operation mode comprising the steps 6 and 7.

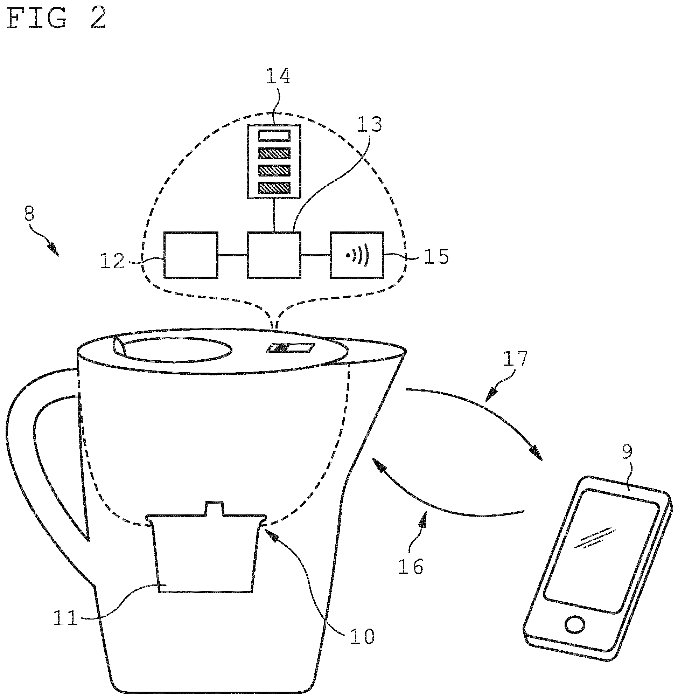

Figure 2 schematically illustrates a liquid filter system 8 and an external electronic data processing device 9 with which the method according to the invention and described above is performed. The liquid filter system 8 comprises a filter cartridge seating 10 adapted to receive a filter cartridge 11 for filtering a liquid, e.g. water, that is feed to the liquid filter system 8. The liquid filter system 8 also comprises a determination unit 12 for determining the quantity of liquid that has been filtered by the filter cartridge 11, a comparison unit 13 for comparing the current quantity of liquid value that has been determined with the determination unit 15 with an individual depletion threshold liquid quantity value, and an indicator unit 14 that indicates a depletion information corresponding to the filtered liquid quantity approaching or exceeding the individual depletion threshold liquid quantity of the filter cartridge 11 of the liquid filter system 8. The comparison unit 13 comprises a control unit with a microprocessor that performs all operations of the liquid filter system 8 that are required for performing the method described above.

The liquid filter system 8 also comprises a transmission unit 15 for receiving data 16 from the external electronic data processing device 12 and, if optionally implemented, for sending data 17 to the external electronic data processing device 9. The external electronic data processing device 9 can be e.g. a smartphone or any other computer device that is adapted to communicate with the liquid filter system 8 and to perform the steps 1 to 4 of the method described above.

## Claims

1. Method for determining a depletion of a filter cartridge (11) within a liquid filter system (8) comprising a determination unit (12), a comparison unit (13) and an indicator unit (14), whereby in a determination step (6) a filtered liquid quantity that has been filtered by the filter cartridge (11) is determined by the determination unit (12), whereby in a comparison step (7) the determined filtered liquid quantity is compared by the comparison unit (13) with a depletion threshold liquid quantity that is stored within the comparison unit (13) and that corresponds to the depletion of the filter cartridge (11) due to the amount of liquid that has been filtered with the liquid filter system (8), and whereby in case of the filtered liquid quantity exceeds the depletion threshold liquid quantity, an depletion information corresponding to the filtered liquid quantity exceeding the depletion threshold liquid quantity is indicated to a user of the liquid filter system (8) by the indicator unit (14), **characterized in that** within a configuration step (1, 2, 3) an individual depletion threshold liquid quantity is determined with an external electronic data processing device (9) with individual information, and the individual depletion threshold liquid quantity is transmitted to the transmission unit (15) and stored within the comparison unit (13) as updated data for the depletion threshold liquid quantity that is used within the comparison step (7).

2. Method according to claim 1, **characterized in that** the individual information for calculating the individual depletion threshold liquid quantity comprises information about local water hardness of water that is filtered with the liquid filter system (8).

3. Method according to claim 1 or claim 2, **characterized in that** the individual information for calculating the individual depletion threshold liquid quantity comprises information about the filter cartridge (11) that is currently in use within the liquid filter system (8) or information about individual usage of the liquid filter system (8) by a user.

4. Method according to any of the preceding claims, **characterized in that** during the configuration step the external electronic data processing device (9) requests a manual input for the individual information.

5. Method according to any of the preceding claims, **characterized in that** during the configuration step the external electronic data processing device (9) evaluates graphical information from a digital picture and determines the individual depletion threshold liquid quantity on the basis of the evaluated graphical information.

6. Method according to any of the preceding claims, **characterized in that** during the configuration step the external electronic data processing device (9) comprises a geographic data obtaining unit and automatically obtains the individual information on the basis of the geographic data obtained with the geographic data obtaining unit.

7. Method according to any of the preceding claims, **characterized in that** the indicator unit (14) indicates a remaining information that corresponds to a remaining quantity of liquid that can be filtered with the liquid filter system (8) before the filtered liquid quantity exceeds the depletion threshold liquid quantity.

8. Method according to any of the preceding claims, **characterized in that** at the beginning of the configuration step a preset depletion threshold liquid quantity data is transmitted by the transmission unit (15) to the external electronic data processing device (9), and that an individual depletion threshold liquid quantity is calculated with the external electronic data processing device (9) by modifying the preset depletion threshold liquid quantity with individual information provided from the external electronic data processing device (9).
